# EUROPEAN PATENT SPECIFICATION

(11) **EP 1 232 712 B1**
(45) Date of publication and mention of the grant of the patent: **27.07.2005**
(21) Application number: 02380025.3
(22) Date of filing: 04.02.2002
(51) Int. Cl.: A47J 43/07

(54) **Perfected detachable watertight arm for whipping and beating machines, mincing machines and the like**
Verbesserter, abnehmbarer, wasserdichter Arm für eine Küchenmaschine
Bras amovible, perfectionné et étanche pour des appareils électroménagers

(30) Priority: 05.02.2001 ES 200100258
(43) Date of publication of application: 21.08.2002
(73) Proprietor: Sammic, S.L., 20730 Azpeitia, Guipuzcoa (ES)
(72) Inventor: Aguirrezabalaga Zubizarreta, Aitor, 20730 Azpeita, Guipuzcoa (ES); Hidalgo Garcia, Javier, 20700 Tolosa, Guipuzcoa (ES)
(74) Representative: Riera Blanco, Juan Carlos

(56) References cited:
- DE-A- 19 729 446
- FR-A- 2 780 264
- US-A- 3 135 500

## Description

The herein specification refers to a Utility Model application, in relation to a perfected detachable watertight arm for whipping and beating machines, mincing machines and similar, the purpose of which is to facilitate blending operations on foodstuffs subjected to the action of said arm, or to mixing operation, presenting at the end of the arm it is intended to introduce into the container that holds the food a watertight piece that is fitted by means of the insertion into the same of three pins, by way interlocking connections in a utensil, which in a twisting movement creates the fit and, consequently, the watertightness, presenting an internal bearing support.

### FIELD OF THE INVENTION

This invention is of application within the industry dedicated to the manufacture of whipping and beating machines, mincing machines and the like.

### BACKGROUND OF THE INVENTION

The applicant is aware of the current existence of a number of arms intended for adaptation to the body housing the motor that generates the spin in order to set in motion the helixes or blades that are attached to one end of the arm, while at the opposite end means have been provided for fitting to the bottom-most zone of the motor-carrying body with the aim of facilitating the spin of the blending or mixing helixes, using by way of connection between the motor and the helixes a prolonged shaft that is joined at one of its ends to the helixes or the like and at the opposite end to the spin-generating element.

It is known that the watertightness required in order to comply with the standards in force in the European Union calls for the maintenance of a total hermeticism or watertightness in the piece that is joined to the end that bears the helixes, with the aim of avoiding the proliferation of any colonies of bacteria that may be left in the areas close to the helix within the cylindrical body that constitutes the arm.

To date this theoretical watertightness has been attained with the aid of pieces fastened in place with by screws which, whether presenting a transverse groove or countersunk in the form of a star or any other shape, formed hollows that were difficult to clean.

As a consequence of these anomalies, it was feasible that potential colonies of fungi or bacteria proliferate, in the face of which the current standards regarding the subject are quite specific in making it obligatory to attach hermetic pieces in which grooves or hollows are entirely absent.

The evident solution to this problem would be to dispose of a watertight piece that might permit the hermetic closure of the end of the arm that bears the helixes and that at, the same time, the watertightness achieved were attained by a movement of torsion or pressure, without the intervention of screws or the like that present concave zones or hollows.

Nevertheless, the applicant has no knowledge of the current existence of an invention endowed with the characteristics indicated above as being the most appropriate.

Document FR-2 780 264 informs of the existence of a machine tool used in the processing of products, primarily food products, which comprises a tubular casing, provided, at a first end, with fixing means to the machine, and at a second end with an organ receiving cavity for the processing of products, the latter piece being connected to the first end of a movement transmission shaft which extends along the tubular casing; and, at its other end, it incorporates disengageable coupling means with respect to a drive shaft connected to the machine, said transmission shaft being provided with centring and guiding means which are connected to the rest of the tool through fixing means which may be detached by the machine operator in order to disassemble it and, consequently, disassemble the shaft end from the rest of the tool during maintenance operations.

### SPECIFICATION OF THE INVENTION

The perfected detachable watertight arm for whipping and beating machines, mincing machines and the like, object proposed by the invention, constitutes in itself an evident novelty in its particular field of application, in that it brings together in its context all the characteristics indicated by the current regulations but also achieves the hermetic fit that watertightness entails in a simplified manner with the aid of a tool.

To be more precise, the perfected detachable watertight arm for whipping and beating machines, mincing machines and the like, which is object of the invention, is composed on the basis of a noticeably prolonged cylindrical body, hollow on the inside and fabricated in stainless steel, which present at one of its ends a hollow component of a form akin to a spherical section, presenting some openings in its perimeter and furnished at the end of the cylindrical body with the elements pertinent for its fixing to the rotor mechanism that generates the motion of the internal axis which, passing along the inside of the cylindrical body, sets in motion at the opposite end a helix that is duly fixed to the axis and sealed off by a piece joined to the point of union which prevents its separation.

The opposite end to the area of interlocking, emerging from the cylindrical body and of a plastic material, similarly presents a form akin to a spherical section, supplied with harmonic depressions in the perimeter and furnished on the inside with a piece circular in plan, equipped with three equidistant pins emerging from its surface that act as the sealing or watertight piece when in connection with the tubular or cylindrical body, emerging at the central zone of this latter piece from the duly sealed off axis, to which the helix of the mixer or blender is attached and retained in position by the piece that acts as a hermetic clasp.

In order to achieve the attachment of the watertight piece, the use of a key or tool has been provided for which, supplied with three equidistant protuberances of a dimension that permits the pins emerging from the watertight piece to be lodged in their ends, will allow, on applying a motion of torsion to this key, the hermetic fit of the watertight, piece inside the mixing zone, thereby proceeding to enable the attachment of the helix once the fitting tool has been removed.

### DESCRIPTION OF THE DRAWINGS

In order to complement the specification that has been embarked upon and to assist the better understanding of the invention's characteristics, the herein specification is accompanied, as an integral part of it, by a set of drawings in which what follows below, itself illustrative and non-binding by nature, has been represented:

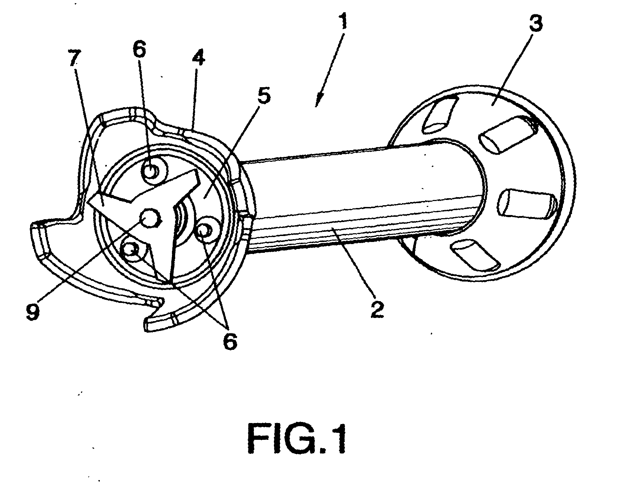

Figure 1.- Corresponds to a perspective view of the perfected detachable watertight arm for whipping and beating machines, mincing machines and the like, viewed from the whipping and beating or mincing zone.

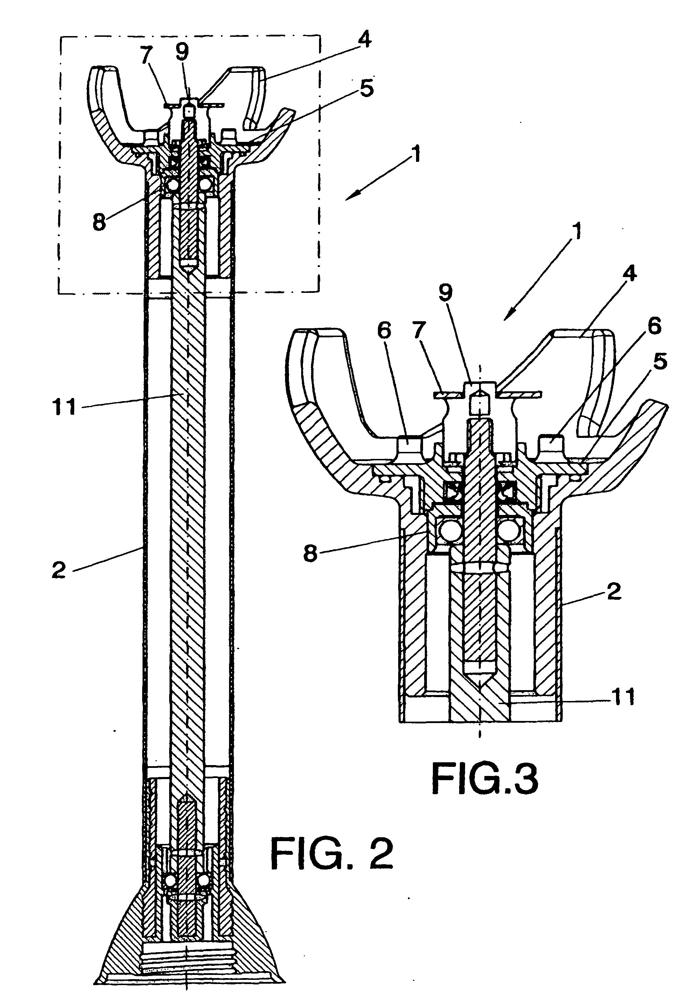

Figure 2.- Gives a properly sectioned side elevation of the object shown in figure 1, in which graphic representation may be seen the elements that are present inside the body of the arm and for which this invention has no claim.
Figure 3.- Shows a detailed cross-section of the end of the arm represented in figures 1 and 2, to which the blades and the watertight body are attached, while the existence of a bearing support may also be viewed in this graphic representation.
Figure 4.- Represents finally a view of the end of the arm shown in the previous figures and seen in perspective, with the additional presence in this figure of the key or tool that collaborates in achieving the fastening of the body or watertight element.

### PREFERRED EMBODIMENT OF THE INVENTION

In the light of these figures it may be noticed how the perfected detachable watertight arm for whipping and beating machines, mincing machines and the like, is composed of a cylindrical body (2), hollow on the inside and fabricated in stainless steel, which presents at both ends two zones (3) and (4) respectively with the form of a spherical section, end zone (3), which like end zone (4) is fabricated with a rigid plastic material, being intended to permit attachment with the body of the mixer or blender that houses the motor and the elements pertinent to generating the rotation of an axis (11) which, positioned longitudinally inside the cylindrical - cylindrical body (2), transmits the spinning motion from end zone (3) to end zone (4), thus bringing into operation a helix (7), which is what acts directly on the foodstuff to be processed.

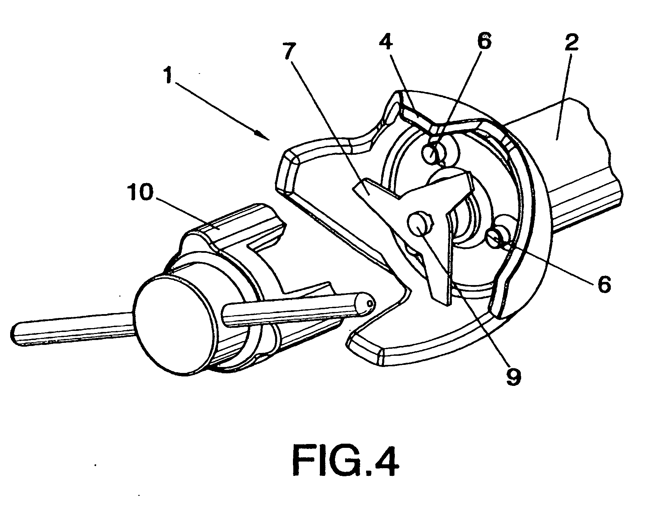

In order to achieve total and absolute watertightness, for end zone (4), provided with harmonic depressions in its perimeter that facilitate the movement of the foodstuff processed, provision has been made for the attachment of a circular piece (5), endowed with three equidistant pins or protuberances (6), which, free of depressions or protuberances in their structure, are completely smooth, by means of which, and with the collaboration of a key (10) as represented in figure no. 4 which is supplied with protuberances that coincide with the pins or protuberances (6), in a movement of torsion the watertight fit is achieved of circular piece (5) to the end of the cylindrical body (2) inside end zone (4), about which internal zone it should be indicated that it presents a support for bearings (8) which facilitate the spin of the helix (7), which is duly fixed to the end of the axis (11) with the collaboration of auxiliary elements (to which no reference is made).

In short, the circular piece (5) has the capacity to achieve watertightness at the end of the cylindrical body (2) of the arm (1), without using conventional screws, and thus contributes to the prevention of the accumulation of dirt in the grooves or depressions that exist in screws, thus eliminating the possibility of the existence of any colonies of bacteria since the entire surface of the internal zone is covered by the end zone (4), which is totally smooth and free of depressions, edges and grooves.

It is not deemed necessary to continue further with this specification in order that anyone skilled in the art might understand the scope of the invention and the advantages that are to be derived from it.

The materials, form, size and arrangement of the elements will admit of variation, provided that it does not entail any alteration to the essence of the invention.

The terms in which this specification has been described should in all cases be taken in a broad and non-binding sense.

## Claims

1. Improved watertight arm, applicable for whipping and beating machines, mincing machines and similar, of the type that are made from a stainless steel cylindrical body (2), hollow inside, throughout which an axis (11) passes, transmiting rotary movement from a driving means coupled to one of its ends to a blade (7) connected to the opposite end, and which may be applied to the food one wants to operate, the cylindrical body (2) having, at one of its ends, an end zone (4) generally semi-spherical, it also comprises a circular piece (5) housed inside said end zone (4) configured in semi-spherical shape, **characterized by** the circular piece (5) having three equidistant pins or protuberances (6), both of said circular piece (5) and said pins or protuberances (6) having their respective surfaces completely smooth, and said circular piece (5) being configured such that a watertight coupling with the cylindrical body (2) is made simply by the torsion of the circular piece (5) with the aid of a tool (10).

## Patentansprüche

1. Verbesserter wasserdichter Arm, der für Mixer und Zerkleinerer und Ähnliches anwendbar ist, der Art, dass er aus einem zylinderförmigen Körper (2) aus rostfreiem Stahl hergestellt ist, im Innern hohl, durch den eine Achse (11) führt, die von einem Antriebsmittel eine Drehbewegung überträgt, das mit einem seiner Enden mit einem Schneidemesser (7) verbunden ist, das mit dem gegenüberliegenden Ende verbunden ist und das auf die Nahrung, die man bearbeiten möchte, angewendet werden kann, wobei der zylinderförmige Körper (2) an einem seiner Enden einen im Allgemeinen halbkugelförmigen Endbereich (4) besitzt, er umfasst ebenfalls ein kreisförmiges Stück (5), das im Innern des besagten Endbereiches (4) untergebracht ist, der in einer halbkugelförmigen Form gestaltet ist, **dadurch gekennzeichnet, dass** das kreisförmige Stück (5) drei abstandsgetreue Stifte oder Ausstülpungen (6) besitzt, wobei sowohl das besagte kreisförmige Stück (5) als auch die besagten Stifte oder Ausstülpungen (6) ihre jeweiligen vollständig glatten Oberflächen besitzen und besagtes kreisförmiges Stück (5) so gestaltet ist, dass eine wasserdichte Verbindung mit dem zylinderförmigen Körper (2) einfach durch eine Torsion des kreisförmigen Stücks (5) mit der Hilfe eines Werkzeuges (10) geschaffen wird.

## Revendications

1. Bras étanche amélioré applicable aux hache-viandes, batteurs, mélangeurs de viande ou appareils similaires, du type des appareils fabriqués à partir d'un corps cylindrique en acier inoxydable (2), disposant d'un creux interne à travers lequel passe un axe (11), qui transmet un mouvement rotatif depuis un mécanisme d'entraînement accouplé à l'une de ses extrémités vers une lame (7) reliée à l'extrémité opposée, et qui peut être utilisé pour traiter n'importe quelle nourriture, le corps cylindrique (2) étant doté, au niveau de l'une de ses extrémités, d'une zone finale (4) généralement semi sphérique ; il comprend également une pièce circulaire (5) logée à l'intérieur de ladite zone finale (4) conçue de forme semi sphérique, **caractérisé en ce que** la pièce circulaire (5) est équipée de trois broches ou protubérances (6) équidistantes, ladite pièce circulaire (5) et les dites broches ou protubérances (6) étant toutes dotées d'une surface respective totalement lisse, et ladite pièce circulaire (5) ayant été conçue de sorte à ce qu'un assemblage étanche avec le corps cylindrique (2) puisse se réaliser simplement par la torsion de la pièce circulaire (5) à l'aide d'un outil (10).
